(19) Europäisches Patentamt
European Patent Office
Office européen des brevets

(11) **EP 3 999 754 B1**

(12) **EUROPÄISCHE PATENTSCHRIFT**

(45) Veröffentlichungstag und Bekanntmachung des Hinweises auf die Patenterteilung:
**28.08.2024   Patentblatt 2024/35**

(21) Anmeldenummer: **20764293.5**

(22) Anmeldetag: **16.07.2020**

(51) Internationale Patentklassifikation (IPC):
**F16D 55/12** *(2006.01)*

(52) Gemeinsame Patentklassifikation (CPC):
**F16D 55/12;** F16D 55/18; F16D 55/2245;
F16D 2055/0058; F16D 2066/005; F16D 2121/12;
F16D 2125/14

(86) Internationale Anmeldenummer:
**PCT/DE2020/000159**

(87) Internationale Veröffentlichungsnummer:
**WO 2021/008642 (21.01.2021 Gazette 2021/03)**

(54) **BREMS- UND/ODER KLEMMVORRICHTUNG MIT EINTEILIGEM SPALTGEHÄUSE UND SENSORMODUL**

BRAKING AND/OR CLAMPING DEVICE HAVING A ONE-PIECE SPLIT HOUSING AND A SENSOR MODULE

DISPOSITIF DE FREINAGE ET/OU DE SERRAGE COMPRENANT UN LOGEMENT DIVISÉ D'UNE SEULE PIÈCE ET MODULE DE CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2019   DE 102019004953**

(43) Veröffentlichungstag der Anmeldung:
**25.05.2022   Patentblatt 2022/21**

(73) Patentinhaber:
• **Zimmer, Martin**
  **77866 Rheinau (DE)**
• **Zimmer, Günther**
  **77866 Rheinau (DE)**

(72) Erfinder:
• **Zimmer, Martin**
  **77866 Rheinau (DE)**
• **Zimmer, Günther**
  **77866 Rheinau (DE)**

(74) Vertreter: **Thämer, Wolfgang**
  **Zürn & Thämer**
  **Patentanwälte**
  **Adalbert-Stifter-Straße 12**
  **76275 Ettlingen (DE)**

(56) Entgegenhaltungen:
EP-A1- 3 403 758          DE-A1- 2 106 009
DE-B3- 102016 005 549     DE-B3- 102016 009 581

**Beschreibung**

Die Erfindung betrifft eine Brems- und/oder Klemmvorrichtung für eine gegenüber einem Grundkörper geführte Welle mit einer Betätigungsbaugruppe und mit einer Wellenanbindungsbaugruppe. Der Betriebszustand der Betätigungsbaugruppe wird temporär oder dauerhaft mittels eines Sensormoduls überwacht. Dabei weist die Betätigungsbaugruppe ein Spaltgehäuse auf, das eine Anbauzone und eine bereichsweise elastisch beulbare Biegezone mit zwei über einen Spaltraum beabstandete Biegeplatten hat. Die Biegeplatten haben in zwei einander gegenüberliegenden Klemmzonen jeweils Zangenbacken mit Reibflächen, deren Flächennormalen nach innen gerichtet sind. Zwischen den Biegeplatten und mindestens einen Stützelement liegt ein abgedichteter Druckraum, der zum elastischen Auseinanderdrücken der Reibflächen mit einem Druckmedium befüllbar ist. Die Wellenanbindungsbaugruppe hat einen Kupplungsbereich, der zwei voneinander beabstandete Reibflächen hat, deren Flächennormalen nach außen weisen. Die Wellenanbindungsbaugruppe weist einen Flanschbereich auf, über den sie entweder direkt oder indirekt über einen Spannmechanismus an der Welle angeordnet ist. Bei entlastetem Druckraum sind die Reibflächen der Betätigungsbaugruppe an den Reibflächen der Wellenanbindungsbaugruppe unter Bereitstellung der Klemm- und/oder Bremskraft angelegt.

Die DE 10 2016 009 581 B3 beschreibt eine Brems- und/oder Klemmvorrichtung mit einer Betätigungs- und einer Wellenanbindungsbaugruppe. Die Vorrichtung weist zwei zu einem Spaltgehäuse verbundene beulbare Biegeplatten auf, zwischen denen ein spaltartiger Druckraum angeordnet ist. Die Biegeplatten umgreifen eine Bremsscheibe von außen. Sie liegen dabei axial an der Bremsscheibe an, sofern der Druckraum druckentlastet ist.

Aus der EP 3 403 758 A1 ist eine Brems- und/oder Klemmvorrichtung mit einstellbaren Zangenbacken bekannt.

Der vorliegenden Erfindung liegt die Problemstellung zugrunde, eine derartige Brems- und/oder Klemmvorrichtung zu entwickeln, die auch bei einem großen Durchmesser eine geringe Baubreite aufweist, aus wenigen Bauteilen besteht und zudem überwachbar, einfach, sicher und wartungsfrei funktioniert.

Diese Problemstellung wird mit den Merkmalen des Hauptanspruchs gelöst. Im Übergangsbereich zwischen der Anbauzone und der Biegezone ist mindestens eine Verformungsmesseinrichtung angeordnet. Jede Biegeplatte weist - zur Lagerung mindestens eines Stützelements - vom Druckraum aus eine Axialnut auf. Die Wellenanbindungsbaugruppe weist als Bremsscheibe einen geschlitzten oder mehrfach geteilten Ring auf.

Der Gegenstand der vorliegenden Erfindung ist eine mindestens zweiteilige Brems- und/oder Klemmvorrichtung für Wellen. Das eine Teil wird als Adapter auf die rotierende Welle montiert und an dieser festgeklemmt oder festgeschraubt. Das andere Teil ist eine Art von Zange, die an einem ortsfesten, z.B. die vorgenannte Welle lagernden Maschinenteil befestigt ist. Die Zange hat zwei an je einer Biegeplatte angeordnete z.B. ringförmige Zangenbacken, mit denen sie die Stirnseiten des wellenseitigen Flansches lose umfassen oder drehfest umgreifen kann. Die die Welle bremsenden oder klemmenden Vorrichtungsteile liegen nicht auf der in Radialrichtung orientierten Außenwandung der Welle an.

Die die Zangenbacken tragenden Biegeplatten der Vorrichtung lassen sich vereinfacht als zwei Tellerfedern beschreiben, deren beiden Innenränder einander zugewandt sind, während die im Durchmesser größeren Außenränder in Axialrichtung weit auseinanderliegen. Zwischen den Innenrändern, die eine Klemmzone bilden, ist eine ein- oder mehrteilige Bremsscheibe angeordnet. Werden nun die Außenränder, die die Anbauzone darstellen, in Axialrichtung aufeinander zubewegt, klemmen die im Durchmesser kleineren Innenränder die Bremsscheibe zum Halten federgespannt zangenartig ein. Die Tellerfedern werden bei der Herstellung im Bereich der Außenränder aneinander angeformt, sodass sich der Abstand der Außenränder nicht mehr ändern lässt. Um nun die eingeklemmte Bremsscheibe wieder freizugeben, werden die Tellerfedern mit Öldruck auseinandergepresst. Die Innenränder lösen sich von der Bremsscheibe. Die bisher zum Klemmen wenig vorgespannten Tellerfedern werden somit zum Lösen noch stärker gespannt bzw. verformt.

Bei der vorliegenden Vorrichtung sind die Biegeplatten nahtlos an einer Anbauzone angeformt. Sie bilden ein einteiliges Bauteil. An der Übergangsstelle zwischen der massiven Anbauzone und den davon abstehenden Biegeplatten entsteht bei jedem Auseinanderdrücken der Biegeplatten an den außen liegenden - axialorientierten - Oberflächen eine messbare stauchende Verformung. Diese Verformung wird mit mindestens einem Dehnmessstreifen erfasst, um aus dessen Widerstandsänderung eine Klemm- oder eine Lösestellung der Brems- und Klemmvorrichtungmittel herzuleiten.

Im Ausführungsbeispiel ist pro Spaltgehäuse nur ein Sensormodul verbaut. Es ist auch möglich im Spaltgehäuse ein weiteres Sensormodul zum Beispiel mit einer Teilung von 180 Winkelgrade anzuordnen. Während des Betriebs werden die Signale beider Module parallel erfasst und miteinander verglichen. Liefern die Module unterschiedlich starke Signale, veranlasst die Maschinensteuerung (SPS) eine Störmeldung oder sie leitet ein Abschalten der Brems- und oder Klemmvorrichtung ein. Neben dieser Vergleichsredundanz kann auch eine Auswahlredundanz vorgesehen werden. In diesem Fall werden die Signale von drei Sensormodulen erfasst und miteinander verglichen. In einer Zwei-aus-Drei-Schaltung wird das mehrheitliche Signal ausgewählt und weiterverarbeitet.

Es kann auch eine Prinzipredundanz vorgesehen sein. In diesem Fall werden mindestens zwei Module parallel geschaltet, wobei jedoch jedes Modul auf einem anderen Wirkprinzip besteht. Als zweites Wirkprinzip wird beispielsweise ein Piezosensor verwendet. Der Piezobaustein wird dazu in einer in Umfangsrichtung des Spaltgehäuses angeordneten schlitzförmigen Ausnehmung verklemmt. Diese Ausnehmung sitzt in einer Messstelle, die mit dem Ort der die Verformung messenden Dehnmessstreifen vergleichbar ist. Bei einer Druckbeaufschlagung des Spaltraumes wird der Piezobaustein in der schlitzförmigen Ausnehmung komprimiert, wodurch eine auswertbare Piezospannungsänderung erfassbar ist.

Alternativ lässt sich die Vorrichtung auch so gestalten, dass das Spaltgehäuse an der rotierenden Welle angeordnet ist, während die Bremsscheibe ortsfest gelagert in den nach radial außen offenen Spaltraum hineinragt.

Weitere Einzelheiten der Erfindung ergeben sich aus den Unteransprüchen und der nachfolgenden Beschreibung mehrerer schematisch dargestellter Ausführungsformen.

Figur 1:    perspektivische Ansicht einer Brems- und/oder Klemmvorrichtung mit Sensormodul;

Figur 2:    Teilquerschnitt zu Figur 1 mit Welle in Klemmstellung;

Figur 3:    wie Figur 2, jedoch in Lösestellung;

Figur 4:    Teilquerschnitt der Doppellippendichtung und des Stützelements, vergrößert;

Figur 5:    halbe Ansicht des Spaltgehäuses mit Einfädelnut in einem Ausschnitt;

Figur 6:    Teillängsschnitt des Stützelements, vergrößert;

Figur 7:    perspektivische Ansicht einer radial geteilten Bremsscheibe;

Figur 8:    perspektivische Ansicht einer ungleich geteilten Bremsscheibe;

Figur 9:    perspektivische Ansicht einer einfachgeschlitzten Bremsscheibe;

Figur 10:   perspektivische Ansicht zu Figur 9 mit Ausgleichsgewicht;

Figur 11:   Teilquerschnitt zu Figur 1 im Bereich des Sensormoduls bei Klemmstellung;

Figur 12:   Teilquerschnitt zu Figur 1 im Bereich der Elektronik des Sensormoduls;

Figur 13:   Teilfrontansicht zu Figur 1 im Bereich der Messstelle und der Elektronik, jedoch ohne die Deckel;

Figur 14:   Funktionsprinzip der Verformungsmessung mit einem Sensormodul.

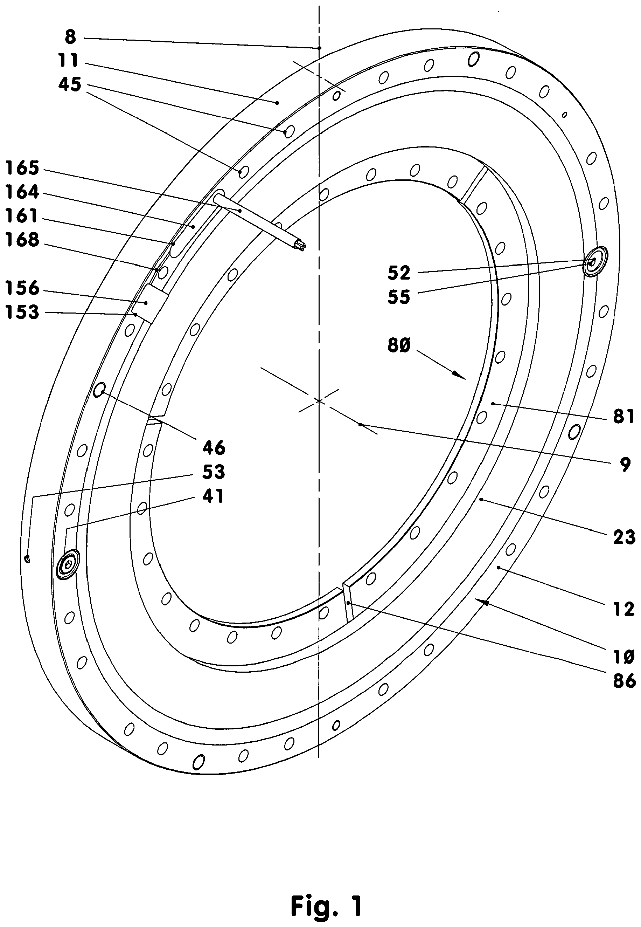

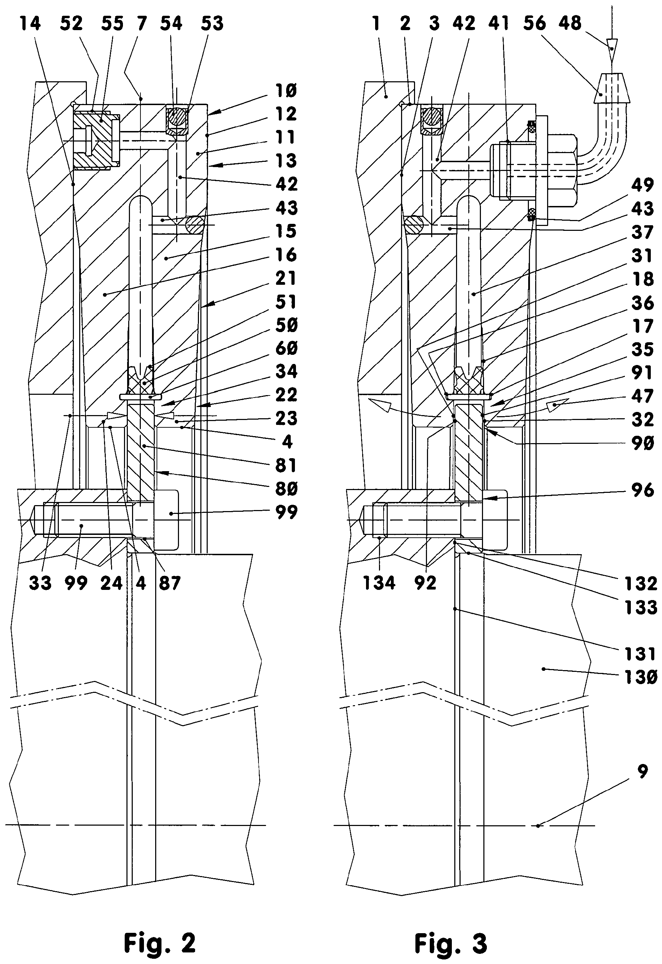

Die Figur 1 zeigt die Brems- und/oder Klemmvorrichtung ohne den tragenden maschinenseitigen Grundkörper (1), vgl. Figur 2 und 3, und ohne die abzubremsende und/oder festzuklemmende Welle (130). Die außenliegende, die Welle (130) umgebende Betätigungsbaugruppe (10) hat eine rückseitige Anbaufläche (3), über die sie mittels Schrauben - nicht dargestellt - am Grundkörper (1) angeschraubt wird. Die Betätigungsbaugruppe (10) umgibt eine Wellenanbindungsbaugruppe (80), die hier aus einer mehrfach geteilten Bremsscheibe (81) besteht. Die Bremsscheibe (81) ist mittels der Schrauben (99) an der Welle (130) drehstarr befestigt. Die Betätigungsbaugruppe (10) hat ein elastisches Spaltgehäuse (11), das mit seinen Zangenbacken (23, 24) - beim Bremsen oder Klemmen - zangenartig an der Bremsscheibe (81) anliegt. Das Spaltgehäuse (11) umschließt zusammen mit einem Dichtring (50) und einem Stützelement (60) einen Druckraum (37). Wird Letzterer mit einem gasförmigen, flüssigen oder gelartigen Druckmittel beaufschlagt, löst sich die zangenartige Umklammerung der Bremsscheibe (81). Am Spaltgehäuse (11) ist im Bereich der maximalen elastischen Verformung, die z.B. beim Übergang in eine Lösestellung (35) entsteht, ein Sensormodul (170) angeordnet.

Der Druckraum (37), vgl. Figur 2, hat ein Volumen, das kleiner ist als 12,5 Prozent des Hüllvolumens der Betätigungsbaugruppe (10). Das Hüllvolumen der in den Figuren dargestellten Variante dieser Betätigungsbaugruppe (10), entspricht einem gegebenen Volumen eines Rohrkörpers, der als Rohrlänge die Vorrichtungsbreite, als Außendurchmesser den äußeren Vorrichtungsdurchmesser und als Innendurchmesser den minimalen Innendurchmesser der Biegeplatten (15, 16) hat.

Die Betätigungsbaugruppe (10) weist ein ring- bzw. rohrförmiges Spaltgehäuse (11) auf, das den z.B. schmalspaltigen ringförmigen Druckraum (37) umschließt. Das Spaltgehäuse (11) ist im unverformten Zustand im Wesentlichen eine ebene Scheibe mit einem Innendurchmesser von z.B. ca. 280 mm und einem Außendurchmesser von z.B. 388 mm. Die maximale Dicke der Scheibe liegt z.B. bei 22 mm. Sie entspricht der oben genannten Vorrichtungsbreite. Das Spaltgehäuse (11) ist aus einem Vergütungsstahl, z.B. 42CrMoS4, gefertigt. Es ist in drei Bereiche (13, 21, 22) aufgeteilt, die in Radialrichtung aneinander anschließen. Der innere Bereich sind die Klemmzonen (22). An sie schließt sich jeweils eine in Radialrichtung weiter außenliegende Biegezone (21) an. Beide Biegezonen (21) münden in einen äußeren Bereich, also die Anbauzone (13).

Das Spaltgehäuse (11) wird zur Herstellung des Spaltraumes (37) von seiner zentralen Bohrung (4) aus mittig zwischen den Stirnseiten ausgefräst. Dazu wird z. B. ein Scheibenfräser verwendet. Die ausgefräste, z.B. 38,7 mm tiefe Nut hat eine Spaltbreite von z.B. 4 mm. Der rinnenförmige Nutgrund hat zum Minimieren von Kerbspannungen hier einen Radius von 2 mm. Im bohrungsnahen Bereich der Bohrung (4) ist die Spaltraumnut 16,5 mm tief in der Feinbearbeitungszone (36) auf 4,3 mm verbreitert.

Die Anbauzone (13), in die der Spaltraum (37) nicht oder nur 1 bis 10 mm hineinragt, hat z.B. beidseitig eine zumindest bereichsweise plane Stirnfläche, über die das Spaltgehäuse (11) an einer Anbaufläche (3) des Grundkörpers (1) anlegbar ist, vgl. Figuren 3 und 2. Nur beispielhaft kontaktiert das Spaltgehäuse (11) auch die grundkörperseitige Zentrierung (2). Die Anbauzone (13) weist für die Befestigung am Grundkörper (1) auf einem Durchmesser von z.B. 370 mm eine Bohrungsgruppe mit beispielsweise 24 Bohrungen (45) auf. Die Bohrungen (45) sind paarweise zusammengefasst, wobei je zwei Bohrungen - bezogen auf die Mittellinie (9) - einen Winkel von 10 Winkelgrade einschließen. Diese Bohrungen (45) können auch Senk- oder Doppelsenkbohrungen sein.

Auf einem Durchmesser von z.B. 375 mm befinden sich vier Gewindedurchgangsbohrungen (46) mit einem M8-Gewinde, vgl. Figur 1. Sie liegen jeweils um 90 Winkelgrade zueinander geteilt. Zwischen mindestens zwei benachbarten Bohrungspaaren der Bohrungen (45) befindet sich eine Zulaufgewindebohrung (41) und eine Verschlussstopfengewindebohrung (52). Die Bohrungen (41, 52) liegen sich innerhalb der Betätigungsbaugruppe (10) z.B. auf verschiedenen Durchmessern diametral gegenüber. Sie sind entweder auf einer Stirnseite (12) oder (14) der Anbauzone (13) oder auf unterschiedlichen Stirnseiten (12, 14) angeordnet, vgl. Figuren 1, 2 und 3.

Gemäß der Figur 3 befindet sich in der Anbauzone (13) mindestens eine Zulaufgewindebohrung (41) auf der Vorderseite (12) der Betätigungsbaugruppe (10). Das hier verwendete M10-Feingewinde nimmt nach Figur 3 - nur beispielhaft - einen Hydraulikadapter (56) auf. Alternativ kann die Zulaufgewindebohrung (41) mit ihrem Schneidring (49) und dem an ihm anliegenden Dichtring auch auf der Rückseite der Betätigungsbaugruppe (10) liegen, vgl. Figur 1. Der Schneidring (49) unterstützt hier die Dichtwirkung zwischen der Anbaufläche (3) und der Rückseite der Betätigungsbaugruppe (10).

Die Zulaufgewindebohrung (41), vgl. Figur 3, mündet in eine radiale Verteilbohrung (42). Nach außen hin ist diese Verteilbohrung (42) durch eine Klemmbüchse (53) verschlossen. In die Bohrung der Klemmbüchse (53) ist eine Stauchkugel (54) eingestemmt, die die Klemmbüchse (53) in der einzelnen radialen Verteilbohrung (42) öl- oder gasdicht dauerhaft fixiert. Die radiale Verteilbohrung (42) trifft z.B. senkrecht auf eine axiale Verteilbohrung (43), die in den Druckraum (37) mündet. Die axiale Verteilbohrung (43) ist zur Anbaufläche (3) hin z.B. mit einer Stauchkugel dicht verschlossen.

Die Verteilbohrungen (42, 43) haben hier einen Durchmesser von 3 mm. Das über den Hydraulikadapter (56) einströmende Hydrauliköl, z.B. ein Öl vom Typ HLP 46 nach DIN 51524, Teil 2, das bei 40° Celsius eine Viskosität von 46 ± 2 mm²/s aufweist, verteilt sich schnell im Druckraum (37).

Nach Figur 2 befindet sich in der Anbauzone (13) zudem mindestens eine Verschlussstopfengewindebohrung (52), die - z.B. als Entlüftungsbohrung beim Befüllen des Druckraums (37) dient - ebenfalls in eine radiale Verteilbohrung (42) mündet und von dort aus über eine axiale Verteilbohrung (43) mit dem Druckraum (37) verbunden ist. Nach außen hin sind diese Verteilbohrungen in vergleichbarer Weise verschlossen, wie die Verteilbohrungen des Zulaufs.

Die beiden an die Anbauzone (13) angeformten Biegeplatten (15, 16) stellen die elastische Biegezone (21) dar. Die beidseits des Spaltraumes (37) gelegenen, elastisch verformbaren Biegeplatten (15, 16) verjüngen sich - bezüglich ihrer Wandstärke - von außen her in Richtung der zentralen Mittellinie (9). Ihre Wandstärke verringert sich im Ausführungsbeispiel von z.B. 9 auf 7,35 mm. Die Formsteifigkeit der Biegeplatten (15, 16) nimmt somit in Richtung der Klemmzone (22) nahezu stetig ab. Die Übergänge zwischen den Zonen (13) und (21) sind beispielsweise mit großen Radien ausgerundet. Die Biegezone (21) ist gegenüber der Anbauzone (13) zurückgenommen, um die Verformung der Biegezone (21) nicht in die zwischen dem Grundkörper (1) und der Anbauzone (13) gelegene Einbaufuge einzutragen.

Die Biegeplatten (15, 16) der Biegezone (21) gehen zur jeweiligen Wellenanbindungsbaugruppe (80) hin in die beiden Klemmzonen (22) über, die die umlaufenden Zangenbacken (23, 24) darstellen. Die Zangenbacken (23, 24) sind zugleich ein Teil der jeweiligen Biegeplatte (15, 16).

Jede Biegeplatte (15, 16) weist zwischen der Biegezone (21) und der Klemmzone (22) eine umlaufende Axialnut (17, 18) auf. Die Axialnut (17, 18), die beispielsweise einen rechteckigen Querschnitt hat, hat bei einer Breite von z.B. 1,1 mm eine Tiefe von z.B. 1,35 mm. Die beiden Kanten des Axialnutgrunds sind abgerundet. Die der Bohrung (4) nächstgelegene Nutwandung der Axialnut (17, 18) ist im Ausführungsbeispiel 4,5 mm von der Bohrung (4) entfernt. Die einzelne Axialnut (17, 18) wird mit einem Scheibenfräser aus der jeweiligen Biegeplatte (15, 16) herausgearbeitet. Dazu hat der Scheibenfräser einen Außendurchmesser, der geringfügig kleiner ist als der Innendurchmesser der Bohrung (4). Zudem hat der Scheibenfräser vorzugsweise nur drei Zähne, die jeweils rechts und links 1,4 mm über die Fräserscheibe überstehen. Die Fräserscheibe selbst hat eine Wandstärke von 1,0 mm. Zum Erzeugen der Axialnuten (17, 18) wird der Scheibenfräser mit einem Zahn voraus zwischen den Biegeplatten (15, 16) in den Druckraum (37) eingefahren. Bei rotierendem Spaltgehäuse (11) wird der nicht rotierende Scheibenfräser zum Fräsen der Axialnut (17) in Richtung der Biegeplatte (15) zugestellt, um nach deren Fertigstellung in umgekehrter Richtung in die Biegeplatte (16) einzutauchen, um dort wiederum die Axialnut (18) herauszufräsen.

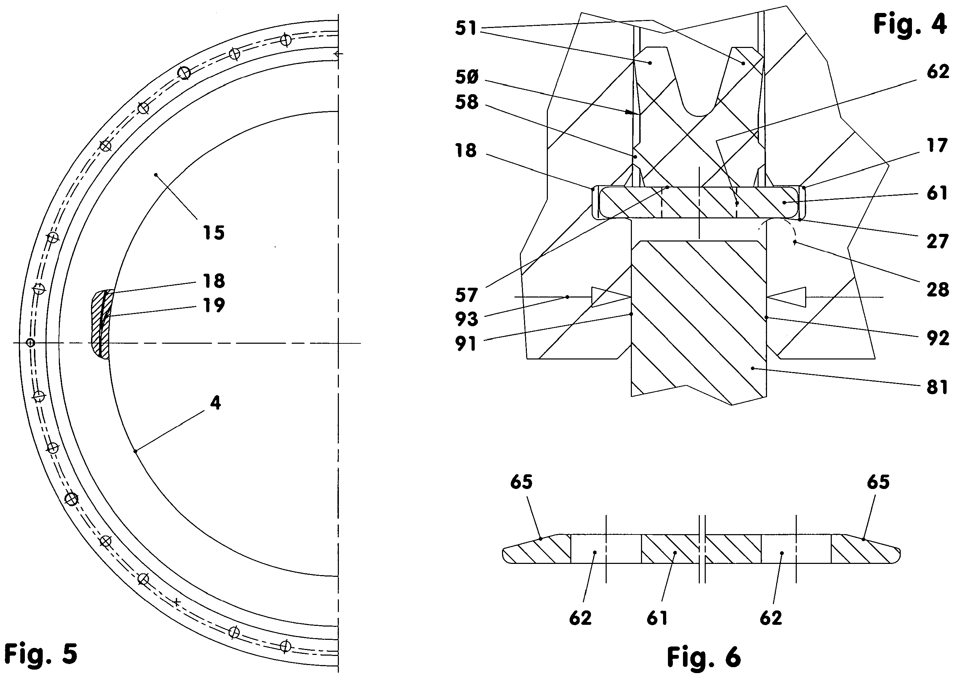

Gemäß Figur 5 weist die Axialnut (17, 18) eine Einfädelnut (19) auf. Letztere ist in jeder Biegeplatte (15, 16) nur einmal vorhanden. Sie hat einem Krümmungsradius von z.B. 30 bis 60 mm. Im Ausführungsbeispiel beträgt der Krümmungsradius 40 mm. Die einzelne Einfädelnut (19) geht tangential in die entsprechende Axialnut (17, 18) über. Der Querschnitt der Einfädelnut (19) entspricht dem der einzelnen Axialnut (17, 18).

In der Axialnut (17, 18) ist als Stützelement (60) ein elastisch verformbarer metallischer Stützstreifen (61) eingelegt, der z.B. aus dem kaltgewalzten Federbandstahl Ck 101 oder aus dem naturharten Federstahl 38 Si 6 gefertigt ist. Der Stützstreifen (61) hat eine Länge, die der mittleren Länge der einzelnen Axialnut (17, 18) abzüglich eines Spiels von 1 mm entspricht. Bei einer Wandstärke von z.B. 1 mm hat er eine Breite von z.B. 6,9 mm. Nach den Figuren 1, 2 und 4 hat der Stützstreifen (61) einen rechteckigen Querschnitt. Alle vier Kanten sind angefast oder abgerundet. Er hat in radialer und axialer Richtung - bei einem unverformten Spaltgehäuse (11) - in der Axialnut (17, 18) jeweils 0,1 mm Spiel.

Gemäß Figur 4 ist die der Bohrung (4) des Spaltgehäuses (11) nächstgelegene Nutwandung (27) eine mehrfachgekrümmte Raumfläche. Um bei einer durch Biegung des Stützstreifens (61) - quer zu seiner Längsausdehnung - eine kantenträgerfreie Auflage in der Axialnut (17, 18) zu ermöglichen, hat die Nutwandung (27) anstelle einer Zylinderfläche in der Kontaktzone eine Teilfläche (28) eines Torus, dessen Krümmung in Figur 4 gestrichelt dargestellt ist. Der kleine Querschnitt des Torus hat einen Durchmesser von z.B. 1,4 mm. Zum Nutgrund der Axialnut (17, 18) hin entfernt sich die Nutwandung (27) tangential im Anschluss an die Torusteilfläche (28) mit einer kegelstumpfmantelförmigen Fläche von der Unterseite des Stützstreifens (61).

Die Mitten der Kontaktstellen zwischen dem Stützstreifen (61) und den Nutwandungen (27) liegen bei festgeklemmter Bremsscheibe (81, 101, 121) z.B. 5,4 mm auseinander.

Der Stützstreifen (61), vgl. Figur 6, weist im Bereich seiner Enden jeweils eine Zugbohrung (62) auf, deren Durchmesser z.B. 2,5 mm misst. Die Mittellinie der einzelnen Zugbohrung (62) ist von den Enden jeweils z.B. 4 mm entfernt. Über mindestens eine Zugbohrung (62) wird der Stützstreifen (61) - in der Regel im eingebetteten Zustand und nach vorherigem Einlegen des Dichtrings - über die Einfädelnut (19) in die Axialnut (17, 18), z.B. Mithilfe eines Durchschlags, eingefädelt. Zur Demontage kann der Stützstreifen (61) ebenfalls mithilfe eines Durchschlags über die Einfädelnut (19) aus dem Spaltgehäuse (11) entfernt werden.

Zur Erleichterung des Einfädelvorgangs hat der Stützstreifen (61) vorn und hinten eine 15°-Fase (65), die sich über 2 mm der Stützstreifenlänge erstreckt. Alle vorderen Kanten sind angefast oder abgerundet.

Jede Zangenbacke (23, 24) hat zwischen der Axialnut (17) und der Bohrung (4) eine plane Reibfläche (31, 32). Die Reibflächen (31, 32), die parallel zur Mittenebene (7) orientiert sind, haben im Ausführungsbeispiel einen mittleren Radius von 113,8 mm. In der Klemmzone (22) beträgt die maximale Breite der Reibfläche (31) z.B. 3,6 mm.

Ggf. sind die Reibflächen (31, 32) auch als kegelstumpfmantelförmige Flächen ausgebildet, sodass beim Klemmen der Bremsscheibe (81, 101, 121) die Reibflächen (31, 32) vollflächig und plan an der jeweiligen Bremsscheibe anliegen.

Nach dem Zusammenbau der Brems- und/oder Klemmvorrichtung liegen die Zangenbacken der Betätigungsbaugruppe (10), bei geklemmter Brems- und/oder Klemmvorrichtung, an der jeweiligen Bremsscheibe (81, 101, 121) der entsprechenden Wellenanbindungsbaugruppe (80, 100, 120) an, vgl. Figur 2. Die Reibflächen (31, 32) beider Zangenbacken (23, 24) haben nach innen gerichtete Flächennormalen (33). Letztere zeigen in Richtung der Mittenebene (7).

Anstelle der planen Reibflächen (31, 32), die zudem parallel zur Anbaufläche (3) orientiert sind, können die Reibflächen auch die Gestalt eines Kegelstumpfmantels oder eines Teilbereiches eines Torus haben.

Radial zur Mittellinie (9) hin wird der Spalt- bzw. Druckraum (37) durch eine Doppellippendichtung (50) abgeschlossen. Die aus z.B. einem Polyurethan mit einer Shore D-Härte von 57 gefertigte Doppellippendichtung (50) hat zwei radial nach außen orientierte Dichtlippen (51), die sich jeweils an den seitlichen Wandungen des Druckraumes (37) aufgrund der eigenen Elastizität und/oder zusätzlich durch den im Druckraum (37) anstehenden Innendruck anlegen. Die Bohrungswandung (57) der Doppellippendichtung (50) liegt auf der glatten radialen Außenwandung des Stützstreifens (61) auf. Nach Figur 4 weist die Doppellippendichtung (50) ca. 1 mm oberhalb der Bohrungswandung (57) beidseits einen Stützsteg (58) auf, über den die Doppellippendichtung (50) - zur Verbesserung des Sitzes im Druckraum (37) - zusätzlich an den Innenwandungen des Spaltraums (37) anliegt.

In den Figuren 2, 3, 7 bis 9 sind als Wellenanbindungsbaugruppen (80, 100, 120) drei verschieden aufgebaute Bremsscheiben (81, 101, 121) dargestellt, die jeweils an einer sie tragenden Welle (130) befestigt sind. Dazu hat die Welle (130) einen Wellenbund (131) mit einer planen Bundfläche (132). Die Welle (130) reduziert dort ihren Durchmesser von z.B. 262 mm auf z.B. 237 mm. Sie hat unterhalb der Bundfläche (132) einen z.B. 4,5 mm breiten Zentrierabsatz (133) mit einem Durchmesser von z.B. 238 mm. Der Wellenbund (131) weist 24 äquidistant geteilte M6-Gewindebohrungen (134) auf, die auf einem Durchmesser von z.B. 249 mm liegen.

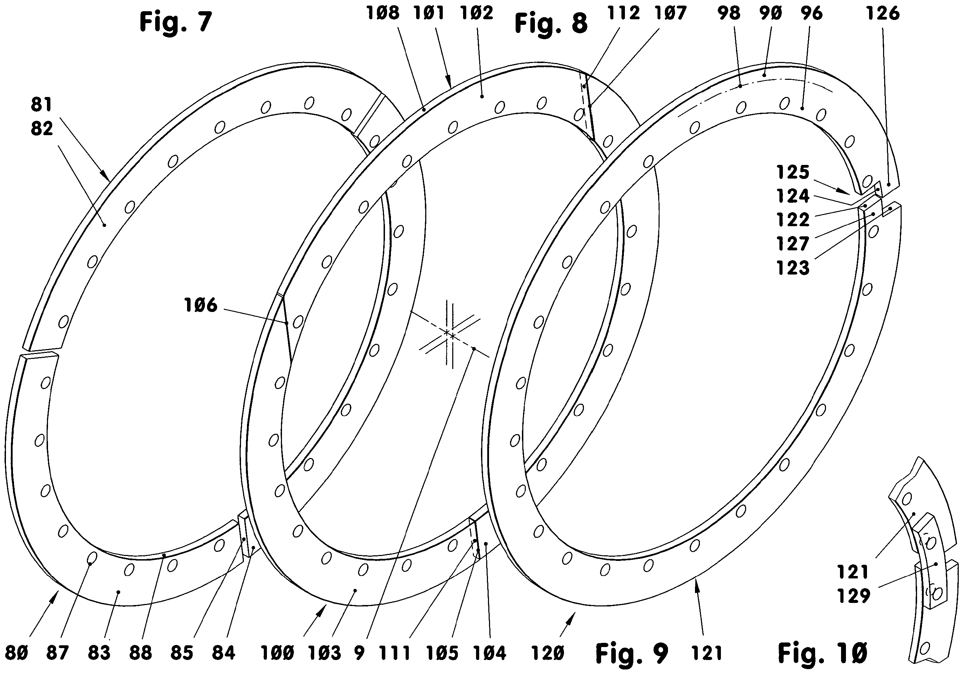

Die Figuren 7-9 zeigen drei verschiedene Bremsscheiben (81, 101, 121), deren Teile hier so angeordnet sind, wie sie gegeneinander im Einbauzustand positioniert sind. Jede Bremsscheibe ist zumindest als Hüllvolumen eine plane Scheibe mit einer Wandstärke von z.B. 4,7 mm, einer zylindermantelförmigen Innenwandung und einer zylindermantelförmigen Außenwandung. Die Innenwandung bildet die Zentrierbohrungen (88). Die großen Planflächen der Bremsscheiben (81, 101, 121) sind feinbearbeitet. Der äußere Teil der Planfläche, vgl. Figur 9, ist der Kupplungsbereich (90) der Bremsscheibe. Er teilt sich in die beiden bremsscheibenseitigen Reibflächen (91, 92) auf. Die Reibflächen (91, 92) haben nach außen gerichtete Flächennormalen (93), vgl. Figur 4. Entgegen der Richtung dieser Flächennormalen (93) ist die Klemmrichtung der Brems- und/oder Klemmvorrichtung orientiert. Der innere Teil der Planfläche der Bremsscheibe ist der Flanschbereich (96) einer jeden Bremsscheibe (81, 101, 121). Beide Bereiche werden durch die in Figur 9 hilfsweise dargestellte strichpunktierte Hilfslinie (98) getrennt.

Die Reibflächen (91, 92) oder die Reibflächen (31, 32) des Spaltgehäuses (11) können eine Oberflächenstruktur aufweisen. Beispielsweise entsteht diese durch Sandstrahlen oder durch eine Diamant- oder Saphirbeschichtung. Derartige Beschichtungen weisen eine Schichtstärke von z.B. 0,038 mm auf. Die durchschnittliche Korngröße des Beschichtungsgrundmaterials liegt bei dieser Schichtstärke bei 30 $\mu$m.

Die einzelne Bremsscheibe bzw. ihr Hüllvolumen hat zur Befestigung an der Welle (130) z.B. 24 Bohrungen (87) mit einem Durchmesser von 6,4 mm.

Die Bremsscheibe (81) besteht aus drei gleichförmigen Kreisringstücken (82-84). Der Zentriwinkel misst z.B. 118,08 Winkelgrade. Demnach haben im Ausführungsbeispiel die drei Radialspalte (85) jeweils eine Spaltbreite von 4 mm. Bei dieser Variante sind die Radialspalte (85) erforderlich, um die Bremsscheibenkreisringstücke (82-84) von der Bohrung (4) aus nacheinander in das Spaltgehäuse (11) einsetzen zu können.

Auch die Bremsscheibe (101) besteht aus drei Bremsscheibenstücken (102-104). Die beiden Stücke (103, 104) sind hierbei deckungsgleich. Beide Stücke sind durch einen Radialspalt (105) getrennt, dessen Spaltbreite z.B. 0,0 bis 0,5 mm ist. Die Spaltbreite wird durch die Drahtstärke des die Bremsscheibe (101) in die drei Stücke (102-104) zerschneidenden Erodierdrahts vorgegeben. Theoretisch kann die Spaltbreite auch 0 mm betragen, sofern die Stücke (102-104) einzeln gefertigt werden.

Die Außenwandungen (108) der beiden Bremsscheibenstücke (102-104) schließen einen Winkel von z.B. 132,1 Winkelgraden ein. Dabei ist bei den Bremsscheibenstücken (103, 104) jeweils eine erste Stirnfläche nahezu eine Radialfläche (111), d.h. die Stirnfläche (111) liegt in einer Ebene, in der auch die Mittellinie (9) liegt. Die jeweils andere, zweite Stirnfläche ist eine Parallelfläche (112), die parallel zur ersten Stirnfläche (111) orientiert ist.

Zwischen den Parallelflächen (112) der Bremsscheibenstücke (103, 104) ist in Figur 8 als Mittelteil das Bremsscheibenstück (102) eingefügt. Letzteres hat ebenfalls parallel zueinander orientierte Stirnflächen, allerdings haben hier beide Stirnflächen den gleichen Flächeninhalt. Zwischen den Stirnflächen des Mittelteils (102) und der einzelnen Stirnfläche (112) des jeweils benachbarten Seitenteils (103, 104) liegt je ein Schrägspalt (106, 107). Bei dieser Bremsscheibe (101) werden zunächst die Seitenteile (103, 104) zwischen den Reibflächen (31, 32) des Spaltgehäuses (11) eingesetzt, um dann nahezu fugenfrei das Mittelteil (102) in die vorhandene Lücke einzufügen.

Die Bremsscheibe (121) ist nach Figur 9 einteilig ausgebildet. Sie bildet einen offenen Ring, dessen Trennstelle (125) aus einem zweifach abgewinkelten Spalt (122-124) besteht, sodass die Bremsscheibe (121) im einen Stirnbereich eine äußere Nase (126) und im anderen Stirnbereich eine innere Nase (127) ausbildet. Die Nasen (126, 127) überdecken sich in Umfangsrichtung um mehr als 0,1 mm. Der Spalt umfasst einen inneren Radialteilspalt (122), einen mittleren Umfangsteilspalt (124) und einen äußeren Radialteilspalt (123). Die Radialteilspalte (122, 123) grenzen an Stirnflächenbereiche, die jeweils in einer Ebene liegen, in der auch die Mittellinie (9) liegt. Die kleinste Spaltbreite des inneren Radialteilspalts (122) misst in Umfangsrichtung mindestens

$$RS = 6/5 * \pi * (d_{Ba}-d_{Gi})$$

in mm.

Sie beträgt im Ausführungsbeispiel 10,4 mm. Der mittlere Umfangsteilspalt hat eine Breite von z.B. 0,75 mm. Für die Montage der Bremsscheibe (121) wird deren Umfang vor dem Einsetzen in das Spaltgehäuse (11) - unter elastischem Verformen - so weit verkleinert, dass ihre Außenwandung (108) durch die Bohrung (4) passt.

Im elastisch verformten Zustand liegen die Nasen (126, 127) nebeneinander. Die Radialteilspalte (122, 123) haben sich auf wenige Mikrometer verkleinert. Nach dem Auffedern der Bremsscheibe (121) im Spaltgehäuse (11) nimmt diese wieder die in Figur 9 dargestellte Form an.

Die Trennstelle (125) der Bremsscheibe (121) verursacht eine auf die Welle (130) wirkende Unwucht. Um diese Unwucht auszugleichen, vgl. Figur 10, wird im Bereich der Trennstelle (125) eine kreisringstückartige Ausgleichsmasse (129) angeordnet. Letztere überdeckt den inneren Radialteilspalt (122). Die Befestigung der Ausgleichsmasse (129) erfolgt über die Schrauben (99).

Die einzelne montierte Bremsscheibe (81, 101, 121) sitzt zum einen mit ihrer Zentrierbohrung (88) auf dem Zentrierabsatz (133) der Welle (130) auf. Sie liegt zum anderen an der Bundfläche (132) an. Die z.B. 20 Schrauben (99) halten die Bremsscheiben (81, 101, 121) drehsteif am Wellenbund (131) fest.

Ausgeliefert wird diese Brems- und/oder Klemmvorrichtung in Kombination mit der gewählten Wellenanbindungsbaugruppe (80, 100, 120) in Klemmstellung (34), vgl. Figur 2. Dabei sitzt die jeweilige Wellenanbindungsbaugruppe (80, 100, 120) koaxial in der Betätigungsbaugruppe (10). Für die Montage in der die Vorrichtung aufnehmenden Maschine wird die Wellenanbindungsbaugruppe (80, 100, 120) auf die Welle (130) geschoben und dort direkt an der Anbaufläche (3) des Grundkörpers (1) anstehend - in der Regel lösbar - befestigt. Abschließend werden die Befestigungsschrauben in die entsprechenden grundkörperseitigen Bohrungen eingesetzt und dort verschraubt.

Steht im Druckraum (37) kein Hydraulikölbetriebsdruck an, so ist die Welle (130) gegenüber dem Grundkörper (1) festgeklemmt. Der Druckraum (37) weist keinen nennenswerten Öldruck auf, da der Ölzulauf über ein nicht dargestelltes Ventil in den Öltank entlastet ist. Die Biegeplatten (15, 16) liegen vorgespannt über ihre Zangenbacken (23, 24) an der Bremsscheibe (81, 101, 121) an, vgl. Figur 2. Die Vorspannung ergibt sich aus der Federrate der vorgebeulten Biegeplatten (15, 16). Die Höhe der Federrate ist eine Funktion der ringscheibenseitigen Werkstoffauswahl und der Geometrie der Biegezone (21). Das erzeugte Brems- bzw. Haltemoment liegt bei den Ausführungsbeispielen bei 3000 ± 200 Nm.

Die Biegeplatten (15, 16) befänden sich nur dann im vollständig entspannten Zustand, wenn keine Bremsscheibe (81, 101, 121) zwischen den Zangenbacken (23, 24) läge. Dann wäre im Ausführungsbeispiel der Druckraum (37) ein Spaltraum mit konstanter Spaltbreite.

Um die Brems- und/oder Klemmvorrichtung zu lösen, wird z.B. über den Hydraulikadapter (56), vgl. Figur 3, der Öldruck im Druckraum (37) auf z.B. 100 bis 150 * 10$^5$ Pa erhöht. Vom Hydraulikadapter (56) aus pflanzt sich die Druckerhöhung über die Verteilbohrungen (42) und (43) in den Druckraum (37) fort. Die Biegeplatten (15, 16) gehen in ihre Lösestellung (35) über. Dabei beulen sie in den elastischen Biegezonen (21), vgl. Figur 3. Jede Klemmzone (22) wandert gegenüber der ortsfest bleibenden Anbauzone (13) im Wesentlichen in Axialrichtung nach außen. Die Zangenbacken (23, 24) heben in Richtung der Pfeile (47) von der Bremsscheibe (81, 101, 121) ab. Die betätigungsbaugruppenseitigen Reibflächen (31, 32) entfernen sich von den wellenanbindungsbaugruppenseitigen Reibflächen (91, 92), so dass zwischen der Welle (130) und dem Grundkörper (1) kein Kontakt mehr besteht.

Während des Lösevorgangs stellt sich im Spaltgehäuse (11) im Übergangsbereich zwischen der Anbauzone, (13) und den Biegeplatten (15, 16) jeweils eine maximale Verformung beidseits des Spaltraumgrundes (38) des Druckraums (37) ein. Die Biegeplatten (15, 16) erfahren im Bereich ihrer Anbindung an der relativ starren Anbauzone (13) in der unmittelbaren Umgebung des Spaltraumgrundes (38) ihre maximale Zugspannung. Dafür entstehen auf den beiden Stirnseiten des Spaltgehäuses (11) entsprechende Druckspannungen, die dort an der Oberfläche zu messbaren Stauchungen führen.

Das Lüftspiel pro Reibflächenpaarung (31) zu (91) und (32) zu (92), also der Abstand zwischen den zuvor sich kontaktierenden Reibflächen, beträgt nun zwischen 0,3 und 0,5 mm. Die Vorrichtung ist auf 5 bis 10 Millionen Öffnungs- bzw. Schließzyklen ausgelegt.

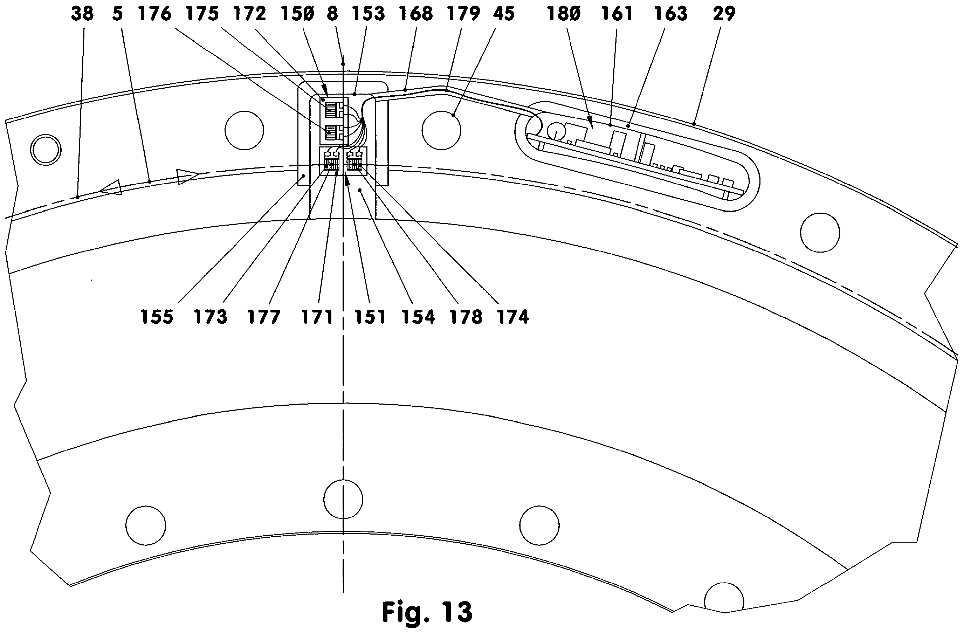

Zur Unterbringung einer Verformungsmesseinrichtung (150) im Spaltgehäuse (11) befinden sich nach Figur 1 auf der Vorderseite (12) zwei mit Deckeln (156, 164) verschlossene Ausnehmungen (153, 161). In der kleineren DMS-Ausnehmung (153) ist ein Sensor (170) in einer Messzone (151) untergebracht, vgl. auch Figur 13, während in der größeren Elektronikausnehmung (161) eine Elektronikbaugruppe (180) zur Versorgung des Sensors (170), zur Auswertung der Sensorsignale und zur bidirektionalen Kommunikation mit einer externen Maschinensteuerung (SPS) angeordnet ist.

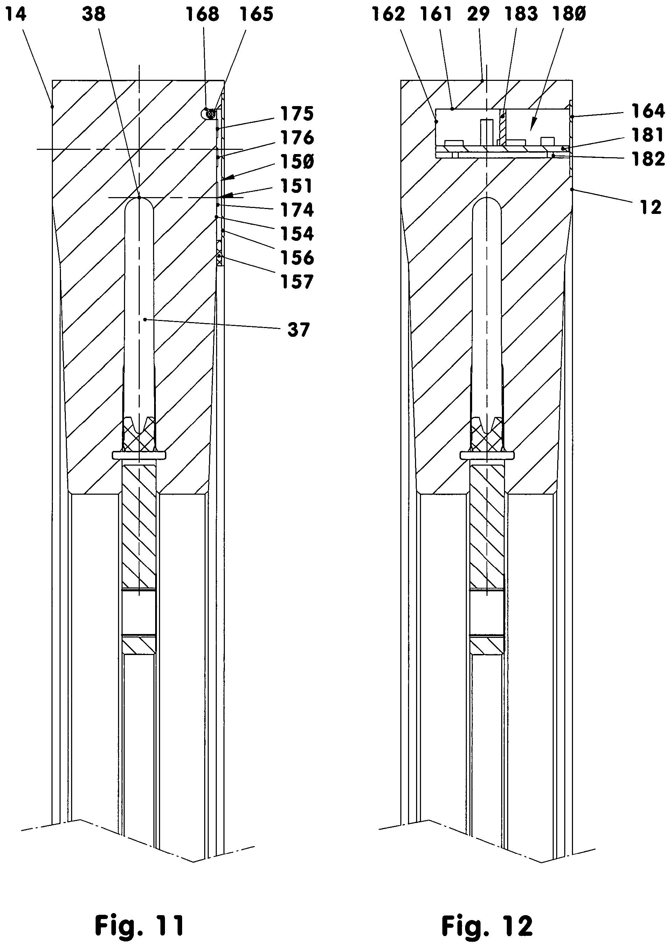

Gemäß der Figuren 11 und 13 ist die DMS-Ausnehmung (153) eine z.B. 1 mm tiefe Nut, die einen ebenen Ausnehmungsgrund (154) aufweist, der parallel zur Mittenebene (7) verläuft. Der Ausnehmungsgrund (154) reicht bis in die äußere Biegeplatte (15) hinein, ohne diese jedoch bezüglich der Wandstärke zu schwächen. Die DMS-Ausnehmung (154) ist in Umfangsrichtung (5) und nach radial außen hin mit einer z.B. 2 mm breiten Sensordeckeleinsenkung (155) umgeben. Auf der Planfläche der Sensordeckeleinsenkung (155), die parallel zum Ausnehmungsgrund (154) orientiert ist, ist ein annähernd rechteckiger, dünnwandiger Sensordeckel (156) aufgeklebt, vgl. Figur 1. Der z.B. aus einem elektrisch leitfähigen Metallwerkstoff gefertigte Sensordeckel (156) ist zumindest an seiner Innenseite mit einer isolierenden Beschichtung ausgestattet.

Am unteren Rand des Sensordeckels (156), der zur Bohrung (4) hin orientiert ist, befindet sich ein Moosgummistreifen (157), mit dessen Hilfe der Sensordeckel (156) gegenüber der Biegeplatte (15) staubdicht abdichtend anliegt.

Nach Figur 13 befindet sich rechts neben der DMS-Ausnehmung (153) die Elektronikausnehmung (161). Die Mitte der Elektronikausnehmung (161) ist gegenüber der Mitte der DMS-Ausnehmung (153) um z.B. 15 Winkelgrade weiter geteilt bzw. versetzt angeordnet. Zwischen den beiden Ausnehmungen (153) und (161) liegt ca. mittig eine Befestigungsbohrung (45), wobei der Abstand zwischen den Befestigungsbohrungen (45) und den Ausnehmungen (153, 161) mindestens 7,5 mm beträgt.

Die Elektronikausnehmung (161) ist eine langlochartige Nut mit einem planen Ausnehmungsboden (162), einer Breite von z.B. 6,4 mm und einer Tiefe von z.B. 17 mm. Der hier gekrümmte Verlauf der Elektronikausnehmung (161), sie erstreckt sich in Umfangsrichtung (5) über z.B. 10 Winkelgrade, verläuft parallel zur radialen Außenwandung (29) des Spaltgehäuses (11). Der Abstand zur Außenwandung beträgt z.B. 3,7 mm. Auch die Elektronikausnehmung (161) hat eine Deckeleinsenkung (163) von z.B. 0,4 mm zur Bildung eines im Mittel z.B. 2 mm breiten Kleberandes.

Die beiden Ausnehmungen (153, 161) sind mit einem z.B. 3 mm tiefen Kabelkanal (168) verbunden, der im Abstand von z.B. 2,75 mm an der Befestigungsbohrung (45) vorbeigeführt ist.

Auf dem beispielsweise fein bearbeiteten Ausnehmungsgrund (154) der DMS-Ausnehmung (153) sind zwei dehnmessstreifentragende Trägerfolien (171, 172) aufgeklebt. Die zentrumsnahe Trägerfolie (171), vgl. Figur 13, trägt zwei nebeneinanderliegende Dehnmessstreifen (173, 174), deren mäanderförmig verlegten, nebeneinanderliegenden geraden Abschnitte parallel zu der in Radialrichtung - ausgehend von der zentralen Rotationsachse (9) - verlaufenden Mittellinie (8) ausgerichtet sind. Die beiden Flächenschwerpunkte (177, 178) der Dehnmessstreifen (173, 174) liegen direkt über dem Spaltraumgrund (38), der in Figur 13 als strichpunktierte Linie dargestellt ist, vgl. auch Figur 11.

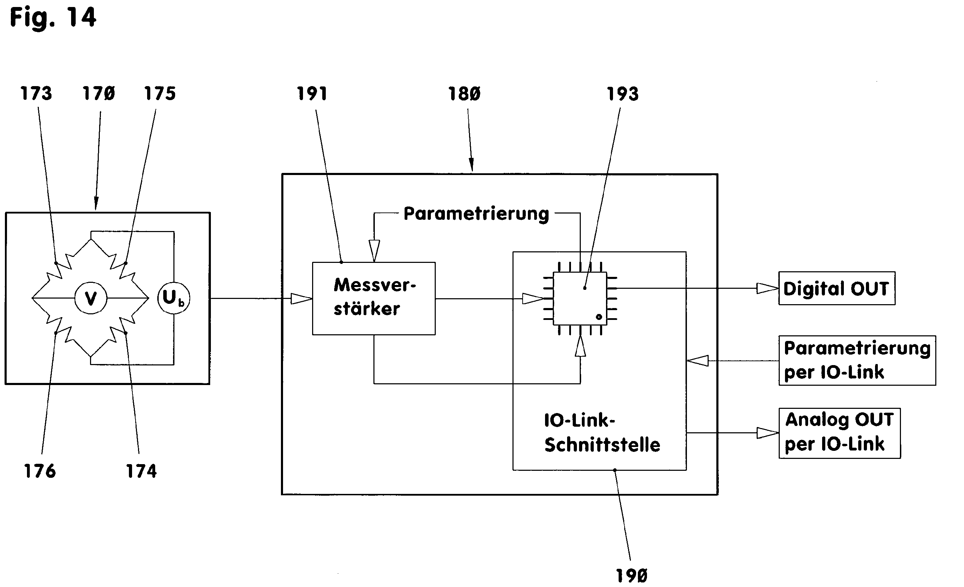

Nach radial außen versetzt befinden sich auf der zentrumsfernen Folie (171) zwei hintereinanderliegende Dehnmessstreifen (175, 176), deren lange, gerade ohmsche Leiterabschnitte quer bzw. senkrecht zu denen der Dehnmessstreifen (173, 174) orientiert sind. Alle vier Dehnmessstreifen sind Teil einer Mess- bzw. Vollbrücke (170), die als ohmsche Widerstände, nach Figur 14, zu einer geschlossenen Raute zusammengeschaltet sind. Dabei ist in einer Rautendiagonalen eine Spannquelle $U_b$ und in der anderen Rautendiagolalen eine Spannungsmesseinrichtung V integriert.

Die beiden die stauchende Verformung der Oberfläche des Spaltgehäuses (11) messenden Dehnmessstreifen (173, 174), aus Figur 13, liegen im Funktionsprinzip nach Figur 14 einander gegenüber. Um 90 Winkelgrade dazu versetzt sind die beiden anderen Dehnmessstreifen (175, 176) ebenfalls einander gegenüberliegend angeordnet.

Die an den Lötfahnen der Dehnmessstreifen (173-176) angeschlossenen Litzen sind zu einem Litzenstrang (179) gebündelt und mit einem Masseschirm geschützt. Der Litzenstrang (179) ist über den Kabelkanal (168) in die Elektronikausnehmung (161) geführt. Dort sind die einzelnen Litzen an der Platine (181) angeschlossen. Letztere (181) trägt zumindest einen Teil der Elektronikbaugruppe (180).

Die Platine (181) ist z.B. mit Hilfe von vier kurzen Bodenstiften (182) und einem zentralen, langen auf der Platinenoberseite abgestützten Stützstift (183) in Radialrichtung fixiert, vgl. Figuren 12 und 13. In Umfangsrichtung (5) liegen die Stirnseiten der Platine (181) an der Wandung der Elektronikausnehmung (161) an. Ansonsten wird sie zwischen dem Ausnehmungsboden (162) und dem Deckel (164) gehalten. Auch dieser Deckel (164) ist an seiner Innenseite ggf. mit einer Isolierung ausgestattet.

Durch eine Bohrung im Deckel (164) wird das Kombinationskabel (165) - z.B. zur drahtgestützten Verbindung mit der SPS - ins Freie geführt, vgl. Figur 1.

Bei Bedarf können in der Elektronikausnehmung (161) auch zwei oder mehrere Platinen gestapelt untergebracht sein. Es ist auch möglich, in der Anbauzone (13) mehrere Elektronikausnehmungen in Umfangsrichtung nebeneinander anzuordnen. Die in den einzelnen Elektronikausnehmungen dann platzierten Platinen sind beispielsweise - ggf. auch zur Umgehung der Befestigungsbohrungen (45) - über leiterbahnentragende Foliengelenke verbunden. Ggf. können die Platinen auch flexible Leiterplatten, z.B. in Form von dünnen Flexleiterplatten, sein. Letztere werden z.B. aus Polyimidfolien gefertigt.

Im Kabelkanal (168) ist der Litzenstrang (179) mit Kunstharz störunanfällig vergossen. Alternativ kann der Kabelkanal (168) auch mit Silikon oder einem separaten Deckel verschlossen sein.

Selbstverständlich kann die gesamte Elektronikbaugruppe (180) auch außerhalb des Spaltgehäuses (11) in einem separaten Gehäuse untergebracht sein, das ggf. am Spaltgehäuse (11) befestigt ist.

Die Figur 14 zeigt das Funktionsprinzip der Verformungsmessung mit einem Sensormodul. Das Sensormodul umfasst zwei Baugruppen. Die erste Baugruppe ist der Sensor (170). Er stellt eine Vollbrücke dar, deren ohmsche Widerstände die Dehnmessstreifen (173-176) sind. Die jeweils einander gegenüberliegenden Dehnmessstreifen (173, 174; 175, 176) sind derselben Dehnung bzw. Stauchung ausgesetzt.

Die zweite Baugruppe ist die Elektronikbaugruppe (180). Sie versorgt unter anderem die Messbrücke (170) mit der Brückenspeisespannung. Zudem werden die Spannungsabgriffe, die zwischen den Dehnmessstreifen (173, 175) und (174, 176) der Vollbrücke liegen, einem programmierbaren Messverstärker (191) der Elektronikbaugruppe (180) zugeführt.

Der programmierbare Messverstärker (191) gibt das Verstärkerausgangssignal an einen Prozessor (193) weiter. Letzterer umfasst eine Rechen- und Steuereinheit sowie einen Filter. Damit ist der Prozessor (193) in der Lage, digitale und analoge Ausgangssignale parallel zueinander zu erzeugen, die an die Maschinensteuerung (SPS) weitergegeben werden. Zugleich kann er von der Maschinensteuerung, zum Beispiel als Teil der IO-Link-Schnittstelle (190), Parameterdaten erhalten, die zur Manipulation des Messverstärkers (191) an diesen weitergegeben werden.

Mithilfe der IO-Link-Schnittstelle (190) wird die Messbrücke (170) mit einer bidirektionalen, kommunikativen Schnittstelle ausgerüstet, um so das Gesamtsystem mit den Zusatzinformationen eines intelligenten Sensors auszustatten. Die einzelne Messbrücke (170) erhält dabei eine eineindeutige Nummer. Die Schnittstelle gibt alle physikalischen Größen an, die von ihr erfasst werden. Zusätzlich speichert sie alle erforderlichen Prozessdaten und deren Verlauf über der Zeit. Ebenso werden Diagnosedaten erhoben.

Somit liefert die Verformungsmesseinrichtung (150), in Kombination mit der IO-Link-Schnittstelle (190), folgende Daten:

- Löse- oder Klemmstellung des Spaltgehäuses (11),
- Temperatur der Auswerteeinheit,
- Temperatur an der Messstelle (optional),
- Zyklenzähler und Betriebsstundenzähler,
- Status und Fehlercodes,
- erstes Warnsignal bei einem Überschreiten von 90 % der Ausgangsmaterialspannung bei 50 Klemmvorgängen in Folge,
- Analogwert der Materialspannung in Prozent und als Absolutwert (Digitalzahl),
- Erkennung von Kabelbruch,
- Plausibilitätsprüfung der Tarierung, um große Tarierabweichungen aufzudecken.

Zudem speichert die IO-Link-Schnittstelle (190) folgende Werte dauerhaft:

- Zyklenanzahl,
- Betriebsdauer, wenn am Sensor (170) eine elektrische Spannung anliegt,
- Betriebsdauer, wenn sich das Spaltgehäuse (11) in der Lösestellung befindet: Stellung mit maximaler Verformung,
- Fehlercode in Verbindung mit der aktuellen Zykluszahl,
- Tarierung mit Zykluszahl und Analogwert,
- jeder x-te Messwert mit Zykluszahl, wobei die Spanne zwischen den aufeinanderfolgenden Messwerten von der Grundbelastung der jeweiligen Brems- und/oder Klemmvorrichtung abhängt. Ab dem Auftreten von mindestens einem Fehlercode wird jeder Messwert registriert.
- Materialspannungen als Analogwerte, die die kritische Materialspannung um mehr als 30% übersteigen,
- Temperaturwerte, die die kritischen Temperaturwerte um mehr als 30% übersteigen.

Alle erfassten Daten beschreiben den Lebenszyklus der Brems- und/oder Klemmvorrichtung. Mit ihrer Hilfe können vorzeitige Wartungen sowie ein ggf. erforderlicher Vorrichtungsaustausch frühzeitig vor einem Ausfall eingeleitet werden.

Außerdem hat der Betreiber der Brems- und Klemmvorrichtung folgende Einstellmöglichkeiten:

- Er kann fünf selbstbestimmte Grenzwerte als Prozentangabe vorgeben, um bei deren Erreichen ggf. unterschiedlich optische oder akustische Warnsignal auszugeben. Beispielsweise kann der Betreiber ein Grobtoleranzfeld mit den Bezeichnungen "grob", "mittel" oder "fein" vorgeben,
- mit Hilfe der Verwendung der IO-Link-Schnittstelle (190) kann der Betreiber eine Nachtarierung der Verformungsmesseinrichtung (150) vornehmen.

Falls der Betreiber der Brems- und Klemmvorrichtung kein IO-Link-Bussystem nutzt, kann er die Verformungsmesseinrichtung (150) mittels einer speziellen Tariereinrichtung so einstellen, dass die Klemm- (34) und die Lösestellung (35) der Brems- und Klemmvorrichtung mit Hilfe einer Standard Input/Output-Schnittstelle abfragbar ist.

Bezugszeichenliste:

| | |
|---|---|
| 1 | Grundkörper |
| 2 | Zentrierung, Außenzentrierung |
| 3 | Anbaufläche von (1) |
| 4 | Bohrung, zentral von (10) |
| 5 | Umfangsrichtung |
| 7 | Mittenebene |
| 8 | fiktive Achse, vertikal, liegt in (7) |
| 9 | Mittellinie der Vorrichtung, zentral, Rotationsachse |
| 10 | Betätigungsbaugruppe |
| 11 | Spaltgehäuse, bereichsweise beulbar |
| 12 | Vorderseite, Stirnseite |
| 13 | Anbauzone |
| 14 | Außenwandung, Stirnwandung, Stirnseite |
| 15 | Biegeplatte, außen |
| 16 | Biegeplatte, innen |
| 17 | Axialnut in (15) |
| 18 | Axialnut in (16) |
| 19 | Einfädelnut |
| 21 | Biegezonen, beulbar, elastisch |
| 22 | Klemmzonen |
| 23 | Zangenbacke, angeformt, rechts |
| 24 | Zangenbacke, angeformt, links |
| 27 | Nutwandung |
| 28 | Torusteilfläche |
| 29 | Außenwandung, radial |
| 31, 32 | Reibflächen |
| 33 | Flächennormalen von (31, 32) |
| 34 | Klemmstellung |
| 35 | Lösestellung, (37) ist druckbeaufschlagt |
| 36 | Feinbearbeitungszone |
| 37 | Druckraum; Spaltraum; Nut |
| 38 | Spaltraumgrund, Grund |
| 41 | Zulaufgewindebohrungen |
| 42 | Verteilbohrung, radial |
| 43 | Verteilbohrung, axial |
| 45 | Bohrungen, Befestigungsbohrungen |
| 46 | Gewindedurchgangsbohrungen |
| 47 | Pfeile, Bewegungsrichtung |
| 48 | Hydraulikölzulauf |
| 49 | Schneidring |
| 50 | Doppellippendichtung, Dichtring |
| 51 | Dichtlippen |
| 52 | Verschlussstopfengewindebohrung |
| 53 | Klemmbüchse |
| 54 | Stauchkugel |
| 55 | Verschlussstopfen |
| 56 | Hydraulikadapter |
| 57 | Bohrungswandung von (50) |
| 58 | Stützstege |
| 60 | Stützelement |
| 61 | Stützstreifen |
| 62 | Zugbohrung, Querbohrung |
| 65 | 15°-Fase |
| 80 | Wellenanbindungsbaugruppe, radiale Teilung |
| 81 | Bremsscheibe, dreiteilig, radial geteilt; Ring |

| | |
|---|---|
| 82-84 | Bremsscheibenkreisringstücke, Teilstücke |
| 85 | Radialspalte |
| 86 | Montagefugen |
| 87 | Bohrungen |
| 88 | Zentrierbohrung |
| 90 | Kupplungsbereich |
| 91, 92 | Reibflächen |
| 93 | Flächennormalen von (91, 92) |
| 96 | Flanschbereich |
| 98 | Hilfslinie |
| 99 | Schrauben |
| 100 | Wellenanbindungsbaugruppe, gemischte Teilung |
| 101 | Bremsscheibe, dreiteilig, gemischt geteilt; Ring |
| 102 | Mittelteil, Bremsscheibenstück, Teilstück |
| 103, 104 | Seitenteile, Bremsscheibenstücke, Teilstücke |
| 105 | Radialspalt |
| 106, 107 | Schrägspalt |
| 108 | Außenwandung, zylindermantelförmig |
| 111 | Stirnfläche, erste; Radialfläche |
| 112 | Stirnfläche, zweite; Parallelfläche |
| 120 | Wellenanbindungsbaugruppe, einfachgeschlitzt |
| 121 | Bremsscheibe, stufengeschlitzter Ring |
| 122 | Radialteilspalt, innen |
| 123 | Radialteilspalt, außen |
| 124 | Umfangsteilspalt, Mitte |
| 125 | Trennstelle |
| 126 | Nase, außen |
| 127 | Nase, innen |
| 129 | Ausgleichsmasse |
| 130 | Welle |
| 131 | Wellenbund |
| 132 | Bundfläche, plan |
| 133 | Zentrierabsatz |
| 134 | M6-Gewindebohrungen |
| 150 | Verformungsmesseinrichtung, Sensormodul |
| 151 | Messzone |
| 153 | DMS-Ausnehmung |
| 154 | Ausnehmungsgrund, Boden |
| 155 | Sensordeckeleinsenkung |
| 156 | Sensordeckel |
| 157 | Moosgummistreifen |
| 161 | Elektronikausnehmung |
| 162 | Ausnehmungsboden, plan |
| 163 | Deckeleinsenkung |
| 164 | Deckel |
| 165 | Kombinationskabel |
| 168 | Kabelkanal |
| 170 | Sensor, Sensormodul, Messbrücke, Vollbrücke |
| 171, 172 | Trägerfolien |
| 173, 174 | Dehnmessstreifen in Verformungszone |
| 175, 176 | Dehnmessstreifen in (13) |
| 177, 178 | Flächenschwerpunkte |
| 179 | Litzenstrang, abgeschirmt |
| 180 | Elektronikbaugruppe, Auswerte- und Kommunikationselektronik |
| 181 | Platine, Flexleiterplatte |
| 182 | Bodenstifte, kurz |
| 183 | Stützstift, lang |
| 190 | IO-Link-Schnittstelle |
| 191 | Messverstärker |
| 193 | Rechen- und Speichereinheit, Prozessor und Filter |
| RS | mittlere Radialteilspaltbreite |
| $U_b$ | Brückenspeisespannung |
| V | Voltmeter |
| $d_{Ba}$ | Außendurchmesser der Bremsscheibe (121) |
| $d_{Gi}$ | Bohrungsdurchmesser (4) des Spaltgehäuses (11) |

**Patentansprüche**

1. Brems- und/oder Klemmvorrichtung für eine gegenüber einem Grundkörper (1) geführte Welle (130) mit einer Betätigungsbaugruppe (10) und mit einer Wellenanbindungsbaugruppe (80, 100, 120),

    - wobei die Betätigungsbaugruppe (10) ein Spaltgehäuse (11) aufweist, das eine Anbauzone (13) und eine bereichsweise elastisch beulbare Biegezone (21) mit zwei über einen Druckraum (37) beabstandete Biegeplatten (15, 16) hat,
    - wobei die Biegeplatte (15, 16) in zwei einander gegenüberliegenden Klemmzonen (22) jeweils Zangenbacken (23, 24) mit Reibflächen (31, 32) aufweisen, deren Flächennormalen (33) nach innen gerichtet sind,
    - wobei zwischen den Biegeplatten (15, 16) und mindestens einen Stützelement (60) ein abgedichteter Druckraum (37) liegt, der zum elastischen Auseinanderdrücken der Reibflächen (31, 32) mit einem Druckmedium befüllbar ist,
    - wobei die Wellenanbindungsbaugruppe (80, 100, 120) einen Kupplungsbereich (90) aufweist, der zwei voneinander beabstandete Reibflächen (91, 92) hat, deren Flächennormalen (93) nach au-ßen weisen,
    - wobei die Wellenanbindungsbaugruppe (80, 100, 120) einen Flanschbereich (96) aufweist, über den sie entweder direkt oder indirekt über einen Spannmechanismus an der Welle (130) angeordnet ist und

- wobei bei entlastetem Druckraum (37) die Reibflächen (31, 32) der Betätigungsbaugruppe (10) an den Reibflächen (91, 92) der Wellenanbindungsbaugruppe (80, 100, 120) unter Bereitstellung der Klemm- und/oder Bremskraft angelegt sind, **dadurch gekennzeichnet,**

- **dass** im Übergangsbereich zwischen der Anbauzone (13) und der Biegezone (21) mindestens eine Verformungsmesseinrichtung (150) angeordnet ist,

- **dass** jede Biegeplatte (15, 16) - zur Lagerung mindestens eines Stützelements (60) - vom Druckraum (37) aus eine Axialnut (17, 18) aufweist und

- **dass** die Wellenanbindungsbaugruppe (80, 100, 120) als Bremsscheibe (81, 101, 121) einen geschlitzten oder mehrfach geteilten Ring aufweist,

2. Brems- und/oder Klemmvorrichtung gemäß Anspruch 1, **dadurch gekennzeichnet, dass** die Verformungsmesseinrichtung (150) aus mindestens einem Sensor (170), einer Auswerte- und Kommunikationselektronik (180) besteht.

3. Brems- und/oder Klemmvorrichtung gemäß Anspruch 2, **dadurch gekennzeichnet, dass** der Sensor (170) eine Messbrücke mit vier Dehnmessstreifen (173-176) ist, wobei die geraden Leiterabschnitte der mäanderförmig verlegten Leiterbahnen zweier - in Umfangsrichtung (5) - nebeneinander angeordneten Dehnmessstreifen (173, 174) die gleiche Orientierung aufweisen, die zudem in Radialrichtung der Betätigungsbaugruppe (10) ausgerichtet sind und von dieser Richtung um maximal ± 5 Winkelgrade abweichen.

4. Brems- und/oder Klemmvorrichtung gemäß Anspruch 3, **dadurch gekennzeichnet, dass** die vier Dehnmessstreifen (173-176) in einer DMS-Ausnehmung (153) angeordnet sind, deren Boden (154) parallel zur Mittenebene (7) orientiert ist.

5. Brems- und/oder Klemmvorrichtung gemäß Anspruch 3, **dadurch gekennzeichnet, dass** die Flächenschwerpunkte (177, 178) der beiden in Umfangsrichtung (5) montierten Dehnmessstreifen (173, 174) - parallel zur Vorrichtungsmittellinie (9) gemessen - über dem Grund (38) des Druckraumes (37) liegen.

6. Brems- und/oder Klemmvorrichtung gemäß Anspruch 1, **dadurch gekennzeichnet, dass** die Auswerte- und Kommunikationselektronik (180), eine Rechen- und Speichereinheit (193), die erfassten Messdaten über die Lebensdauer der Brems- und/oder Klemmvorrichtung speichert und verwaltet, und mindestens eine IO-Link-Schnittstelle (190) aufweist, die die erfassten Messdaten und die Auswerteergebnisse exportiert oder kommuniziert.

7. Brems- und/oder Klemmvorrichtung gemäß Anspruch 1, **dadurch gekennzeichnet, dass** die Auswerte- und Kommunikationselektronik (180) einen programmierbaren Messverstärker (191) aufweist, der über die Rechen- und Speichereinheit (193) einer IO-Link-Schnittstelle (190) von außen steueroder regelbar ist.

8. Brems- und/oder Klemmvorrichtung gemäß Anspruch 1, **dadurch gekennzeichnet, dass** die Axialnuten (17, 18) der Biegeplatten (15, 16) im Bereich zwischen den Reibflächen (31, 32) und dem Grund (38) des Druckraumes (37) angeordnet sind.

9. Brems- und/oder Klemmvorrichtung gemäß Anspruch 1, **dadurch gekennzeichnet, dass** das Stützelement (60) ein elastisch verformbarer metallischer Stützstreifen (61) ist, dessen Länge der mittleren Länge der einzelnen Axialnut (17, 18) entspricht.

10. Brems- und/oder Klemmvorrichtung gemäß Anspruch 9, **dadurch gekennzeichnet, dass** der Stützstreifen (61) - zumindest im Bereich eines Endes - eine Querbohrung (62) aufweist.

11. Brems- und/oder Klemmvorrichtung gemäß Anspruch 9, **dadurch gekennzeichnet, dass** die einzelne Axialnut (17, 18) eine Einfädelnut (19) aufweist, die in sie einmündet.

12. Brems- und/oder Klemmvorrichtung gemäß Anspruch 1, **dadurch gekennzeichnet, dass** die einzelne Bremsscheibe (81, 101, 121) oder deren Teilstücke (82-84; 102-104) beidseitig plan sind.

13. Brems- und/oder Klemmvorrichtung gemäß Anspruch 1, **dadurch gekennzeichnet, dass** die Bremsscheibe (81) aus mindestens drei gleich großen Bremsscheibenkreisringstücken (82-84) besteht, wobei die zwischen den Bremsscheibenkreisringstücken (82-84) gelegenen Montagefugen (86) eine Spaltbreite von mindestens 4 mm haben.

14. Brems- und/oder Klemmvorrichtung gemäß Anspruch 1, **dadurch gekennzeichnet, dass** die Bremsscheibe (101) aus mindestens drei Bremsscheibenstücken (102-104) besteht, die die gleiche Masse haben, wobei die kürzesten Verbindungslinien zwischen Vorrichtungsmittellinie (9) und zwei benachbarten Massenschwerpunkten jeweils den gleichen Winkel einschließen.

15. Brems- und/oder Klemmvorrichtung gemäß Anspruch 1, **dadurch gekennzeichnet, dass** die Bremsscheibe (121) eine gestufte Trennstelle (125) aufweist, deren Radialteilspalt (122) in Umfangsrichtung eine Breite von mindestens RS = 6/5 * $\pi$ * $(d_{Ba}-d_{Gi})$ in mm hat, wobei RS die mittlere Radialteilspaltbreite, $d_{Ba}$ der Außendurchmesser der Bremsscheibe (121) und $d_{Gi}$ der Bohrungsdurchmesser (4) des Spaltgehäuses (11) ist.

## Claims

1. A braking and/or clamping device for a shaft (130) which is guided relative to a main body (1), having an actuating assembly (10) and a shaft coupling assembly (80, 100, 120),

   - wherein the actuating assembly (10) has a split housing (11), which has an attachment zone (13) and a bending zone (21) which can bulge elastically in some regions and has two bending plates (15, 16) spaced by a pressure space (37),
   - wherein the bending plates (15, 16) each have jaws (23, 24) in two mutually opposing clamping zones (22), said jaws having friction faces (31, 32) with surface normals (33) pointing inwards,
   - wherein there is a sealed pressure space (37) between the bending plates (15, 16) and at least one supporting element (60), which sealed pressure space can be filled with a pressure medium in order to push the friction faces (31, 32) apart elastically,
   - wherein the shaft coupling assembly (80, 100, 120) has a coupling region (90) which has two mutually spaced friction faces (91, 92) with surface normals (93) pointing outwards,
   - wherein the shaft coupling assembly (80, 100, 120) has a flange region (96) via which it is arranged on the shaft (130) either directly or indirectly via a clamping mechanism, and
   - wherein, when the pressure space (37) is relieved of load, the friction faces (31, 32) of the actuating assembly (10) are applied to the friction faces (91, 92) of the shaft coupling assembly (80, 100, 120), providing the clamping and/or braking force, **characterised in that**
   - at least one deformation measurement means (150) is arranged in the transition region between the attachment zone (13) and the bending zone (21),
   - each bending plate (15, 16) has an axial groove (17, 18) from the pressure space (37) in order to support at least one supporting element (60), and
   - the shaft coupling assembly (80, 100, 120) has a slotted or multiply split ring as the brake disc (81, 101, 121).

2. The braking and/or clamping device according to Claim 1, **characterised in that** the deformation measurement means (150) consists of at least one sensor (170) and an electronic evaluation and communications system (180).

3. The braking and/or clamping device according to Claim 2, **characterised in that** the sensor (170) is a bridge circuit with four strain gauges (173-176), wherein the straight conductor portions of the conductors, laid in a serpentine shape, of two strain gauges (173, 174) arranged next to one another in the circumferential direction (5) have the same orientation, which are also oriented in the radial direction of the actuating assembly (10) and deviate from this direction by at most $\pm$ 5 degrees.

4. The braking and/or clamping device according to Claim 3, **characterised in that** the four strain gauges (173-176) are arranged in a strain gauge recess (153), the bottom (154) of which is oriented parallel to the centre plane (7).

5. The braking and/or clamping device according to Claim 3, **characterised in that** the centroids (177, 178) of the two strain gauges (173, 174) mounted in the circumferential direction (5) lie above the bottom (38) of the pressure space (37), measured parallel to the device centre line (9).

6. The braking and/or clamping device according to Claim 1, **characterised in that** the electronic evaluation and communications system (180) has a computing and memory unit (193), which stores and manages the collected measurement data over the service life of the braking and/or clamping device, and at least one IO-Link interface (190), which exports or communicates the collected measurement data and the evaluation results.

7. The braking and/or clamping device according to Claim 1, **characterised in that** the electronic evaluation and communications system (180) has a programmable measuring amplifier (191), which can be controlled from outside via the computing and memory unit (193) of an IO-Link interface (190).

8. The braking and/or clamping device according to Claim 1, **characterised in that** the axial grooves (17, 18) of the bending plates (15, 16) are arranged in the region between the friction faces (31, 32) and the bottom (38) of the pressure space (37).

9. The braking and/or clamping device according to Claim 1, **characterised in that** the supporting element (60) is an elastically deformable metallic supporting strip (61), the length of which corresponds to the average length of the individual axial groove (17,

**10.** The braking and/or clamping device according to Claim 9, **characterised in that** the supporting strip (61) has a transverse bore (62), at least in the region of one end.

**11.** The braking and/or clamping device according to Claim 9, **characterised in that** the individual axial groove (17, 18) has a feed-in groove (19) which leads therein.

**12.** The braking and/or clamping device according to Claim 1, **characterised in that** the individual brake disc (81, 101, 121) or parts (82-84; 102-104) thereof are flat on both sides.

**13.** The braking and/or clamping device according to Claim 1, **characterised in that** the brake disc (81) consists of at least three brake disc circular ring parts (82-84) of equal size, wherein the mounting joins (86) situated between the brake disc circular ring parts (82-84) have a gap width of at least 4 mm.

**14.** The braking and/or clamping device according to Claim 1, **characterised in that** the brake disc (101) consists of at least three brake disc parts (102-104) which have the same mass, wherein the shortest connecting lines between the device centre line (9) and two adjacent centres of mass in each case form the same angle.

**15.** The braking and/or clamping device according to Claim 1, **characterised in that** the brake disc (121) has a stepped separating point (125), the radial partial gap (122) of which has, in the circumferential direction, a width in mm of at least
$RS = 6/5 * \pi * (d_{Ba}-d_{Gi})$, where RS is the average radial partial gap width, $d_{Ba}$ is the outer diameter of the brake disc (121), and $d_{Gi}$ is the bore diameter (4) of the split housing (11).

**Revendications**

**1.** Dispositif de freinage et / ou de serrage destiné à un arbre (130), guidé par rapport à un corps de base (1), pourvu d'un ensemble d'actionnement (10) et pourvu d'un ensemble d'accouplement (80, 100, 120) de l'arbre,

- l'ensemble d'actionnement (10) comportant un carter fendu (11), qui détient une zone de montage (13) et une zone de flexion (21) élastiquement bosselable par endroits, pourvue de deux plaques de flexion (15, 16) écartées par l'intermédiaire d'une chambre de pression (37),
- la plaque de flexion (15, 16) comportant dans deux zones de serrage (22) mutuellement opposées chaque fois des mâchoires à pince (23, 24) dotées de surfaces de friction (31, 32) dont les normales à la surface (33) sont dirigées vers l'intérieur,
- entre les plaques de flexion (15, 16) et au moins un élément de support (60) se situant une chambre de pression (37) hermétique, qui pour l'écartement élastique des surfaces de friction (31, 32) peut se remplir d'un agent sous pression,
- l'ensemble d'accouplement (80, 100, 120) de l'arbre comportant une zone de couplage (90), qui dispose de deux surfaces de friction (91, 92) écartées l'une de l'autre, dont les normales à la surface (93) regardent vers l'extérieur,
- l'ensemble d'accouplement (80, 100, 120) de l'arbre comportant une partie de bride (96), par l'intermédiaire de laquelle il est placé soit directement ou indirectement par l'intermédiaire d'un mécanisme tendeur sur l'arbre (130) et
- lorsque la chambre de pression (37) est déchargée, les surfaces de friction (31, 32) de l'ensemble d'actionnement (10) étant appuyées sur les surfaces de friction (91, 92) de l'ensemble d'accouplement (80, 100, 120) de l'arbre, en mettant à disposition la force de serrage et / ou de freinage, **caractérisé**
- **en ce que** dans la région de passage entre la zone de montage (13) et la zone de flexion (21) est placé au moins un système de mesure (150) de la déformation,
- **en ce que** pour loger au moins un élément de support (60), chaque plaque de flexion (15, 16) comporte une rainure axiale (17, 18) à partir de la chambre de pression (37) et
- **en ce que** l'ensemble d'accouplement (80, 100, 120) de l'arbre comporte en tant que disque de freinage (81, 101, 121) une bague entaillée ou plusieurs fois divisée.

**2.** Dispositif de freinage et / ou de serrage selon la revendication 1, **caractérisé en ce que** le système de mesure (150) de la déformation consiste dans au moins un capteur (170), un système électronique (180) d'évaluation et de communication.

**3.** Dispositif de freinage et / ou de serrage selon la revendication 2, **caractérisé en ce que** le capteur (170) est un pont de mesure pourvu de quatre jauges extensométriques (173 à 176), les segments de conducteur rectiligne des pistes conductrices posées en forme de méandres de deux jauges extensométriques (173, 174) placés côte à côte dans la direction périphérique (5) présentant la même orientation, qui par ailleurs sont alignés dans la direction radiale de l'ensemble d'actionnement (10) et divergent de ladite région d'un maximum de ± 5 degrés angulaires.

**4.** Dispositif de freinage et / ou de serrage selon la revendication 3, **caractérisé en ce que** les quatre jauges extensométriques (173 à 176) sont placées dans un évidement (153) de jauge de contrainte, dont le fond inférieur (154) est orienté à la parallèle du plan médian (7).

**5.** Dispositif de freinage et / ou de serrage selon la revendication 3, **caractérisé en ce que**, mesurés à la parallèle de la ligne médiane (9) du dispositif, les centres de gravité (177, 178) de surface des deux jauges extensométriques (173, 174) montées dans la direction périphérique (5) se situent au-dessus du fond (38) de la chambre de pression (37).

**6.** Dispositif de freinage et / ou de serrage selon la revendication 1, **caractérisé en ce que** le système électronique (180) d'évaluation et de communication comporte une unité de calcul et de mémorisation (193), qui mesure et gère les données de mesure enregistrées sur la durée de vie du dispositif de freinage et / ou de serrage et au moins une interface IO-Link (190) qui exporte et communique les données de mesure enregistrées et les résultats d'évaluation.

**7.** Dispositif de freinage et / ou de serrage selon la revendication 1, **caractérisé en ce que** le système électronique (180) d'évaluation et de communication comporte un amplificateur de mesure (191) programmable, qui par l'intermédiaire de l'unité de calcul et de mémorisation (193) d'une interface IO-Link (190) est susceptible d'être commandée et régalée par l'extérieur.

**8.** Dispositif de freinage et / ou de serrage selon la revendication 1, **caractérisé en ce que** les rainure axiales (17, 18) des plaques de flexion (15, 16) sont placées dans la région entre les surfaces de friction (31, 32) et le fond (38) de la chambre de pression (37).

**9.** Dispositif de freinage et / ou de serrage selon la revendication 1, **caractérisé en ce que** l'élément de support (60) est une bande de support (61) métallique, élastiquement déformable, donc la longueur correspond à la longueur moyenne de la rainure axiale (17, 18) individuelle.

**10.** Dispositif de freinage et / ou de serrage selon la revendication 9, **caractérisé en ce que** bande de support (61) comporte au moins dans la région d'une extrémité un perçage transversal (62).

**11.** Dispositif de freinage et / ou de serrage selon la revendication 9, **caractérisé en ce que** la rainure axiale (17, 18) individuelle comporte une rainure d'enfilage (19) dans laquelle elle débouche.

**12.** Dispositif de freinage et / ou de serrage selon la revendication 1, **caractérisé en ce que** le disque de freinage (81, 101, 121) individuel ou ses parties (82 à 84 ; 102 à 104) sont plan(e)s de part et d'autre.

**13.** Dispositif de freinage et / ou de serrage selon la revendication 1, **caractérisé en ce que** le disque de freinage (81) consiste dans au moins trois parties de bague circulaire (82 à 84) de disque de freinage de taille égale, les joints de montage (86) situés entre les parties de bague circulaire (82 à 84) de disque de freinage disposant d'une largeur de fente d'au moins 4 mm.

**14.** Dispositif de freinage et / ou de serrage selon la revendication 1, **caractérisé en ce que** le disque de freinage (101) consiste dans au moins trois parties (102 à 104) de disque de freinage, qui disposent de la même masse, les lignes d'assemblage les plus courtes entre la ligne médiane (9) du dispositif et deux centres de gravité de masse voisins incluant chaque fois le même angle.

**15.** Dispositif de freinage et / ou de serrage selon la revendication 1, **caractérisé en ce que** le disque de freinage (121) comporte un point de sectionnement (125) échelonné, dont la fente partielle (122) radiale présente dans la direction périphérique une largeur d'au moins
RS - 6/5 * $\pi$ * ($d_{Ba}$-$d_{Gi}$) en mm, RS étant la largeur de fente moyenne, $d_{Ba}$ étant le diamètre extérieur du disque de freinage (121) et $d_{Gi}$ étant la diamètre de perçage (4) du carter fendu (11).

**Fig. 1**

**Fig. 2**

**Fig. 3**

Fig. 4

51

50

58

18

57

93

91

62

17

61

27

28

92

81

EP 3 999 754 B1

Fig. 5

15

18

19

4

Fig. 6

65

65

62

61

62

Fig. 7

Fig. 8

Fig. 9

Fig. 10

Fig. 11

Fig. 12

EP 3 999 754 B1

38  5  176  175  172  150  8  153  168  179  45     180  161  163  29

155  173  177  171  151  154  178  174

**Fig. 13**

Fig. 14

**IN DER BESCHREIBUNG AUFGEFÜHRTE DOKUMENTE**

**In der Beschreibung aufgeführte Patentdokumente**

- DE 102016009581 B3
- EP 3403758 A1